# EUROPÄISCHE PATENTSCHRIFT

(11) **EP 3 088 282 B1**
(45) Veröffentlichungstag und Bekanntmachung des Hinweises auf die Patenterteilung: **05.06.2019**
(21) Anmeldenummer: 16167336.3
(22) Anmeldetag: 27.04.2016
(51) Int. Cl.: B62D 21/12

(54) **ADAPTER UND ADAPTIONSVERFAHREN**
ADAPTER AND ADAPTATION METHOD
ADAPTATEUR ET PROCÉDÉ D'ADAPTATION

(30) Priorität: 28.04.2015 DE 202015102106 U
(43) Veröffentlichungstag der Anmeldung: 02.11.2016
(73) Patentinhaber: Alois Kober GmbH, 89359 Kötz (DE)
(72) Erfinder: Eckle, Volker, 89183 Holzkirch (DE); Hildensperger, Wolfgang, 89343 Jettingen-Scheppach (DE); Offner, Markus, 89359 Grundremmingen (DE); Uhl, Stefan, 89312 Günzburg (DE)
(74) Vertreter: Ernicke, Klaus Stefan

(56) Entgegenhaltungen:
- EP-A2- 1 506 914
- WO-A1-2014/121856
- DE-B3- 10 247 420
- DE-U1-202005 009 101

## Beschreibung

Die Erfindung betrifft einen Adapter und ein Adaptionsverfahren mit den Merkmalen im Oberbegriff des Verfahrens- und Vorrichtungshauptanspruchs.

Ein solcher Adapter ist aus der EP 1 634 798 B1 bekannt. Der Adapter wird komplett herstellerseitig in den Zugkopf eingebaut und ist nicht variabel.

Die DE 20 2005 009 101 U1 zeigt einen Adapter, der mit einem Trägerprofil oder Hutprofil eines Zugkopfs verbunden wird. Hierfür weist der Adapter ein offenes Trägergegenprofil auf.

Die EP 1 506 914 A2 lehrt einen Schraubadapter, der sich in ein äußeres Anschlussteil und ein inneres Anschlussteil gliedert.

Es ist Aufgabe der vorliegenden Erfindung, eine verbesserte Adaptionstechnik aufzuzeigen.

Die Erfindung löst diese Aufgabe mit den Merkmalen im Verfahrens- und Vorrichtungshauptanspruch.
Die beanspruchte Adaptionstechnik, d.h. der Adapter und das zugehörige Adaptionsverfahren haben verschiedene Vorteile. Einerseits ist durch die mehrteilige und modulare Ausbildung eine Anpassung des Adapters an unterschiedliche Anbauchassis mit wenig Aufwand möglich. Andererseits kann durch die bedarfsweise Anpassung und Auslegung des Adapters Gewicht gespart werden. Der modulare und variable Adapter bzw. die verschiedenen Adaptervarianten kann/können Bestandteil eines baukastenartigen Adaptersystems sein.

Der modulare Adapter kann sich in ein Oberteil und ein Unterteil gliedern, die miteinander an einer definierten, bevorzugt liegend angeordneten Schnittstelle miteinander schweißfrei, insbesondere durch eine Verschraubung, verbunden werden können.

Das Unterteil ist variabel und kann an unterschiedliche Anbauchassis angepasst werden. Die Anbauchassis können sich durch verschiedene Traglasten, Chassisbreiten, Spurweiten oder dergleichen unterscheiden. Das Unterteil kann entsprechend den Anforderungen ausgebildet und ausgelegt werden. Hierdurch kann der Adapter insgesamt optimiert werden. Ferner kann Bauaufwand und Gewicht gespart werden.

Das einheitliche Oberteil ist zur Verbindung mit dem Fahrgestell des Zugkopfes vorgesehen und ausgebildet. Es kann dort in geeigneter Weise, insbesondere durch Schweißen befestigt werden. Dies kann beim Zugkopfhersteller oder in einer anderen nachgelagerten Produktionsstufe für das letztendlich hergestellte Fahrzeug erfolgen. Durch die Gleichteilausbildung und die Schnittstelle wird dabei der Produktionsaufwand verringert, insbesondere für den Einbau des Oberteils beim Zugkopfhersteller.

Das Unterteil ist zur Verbindung mit dem Anbauchassis vorgesehen und ausgebildet. Diese Verbindung erfolgt vorzugsweise schweißfrei und lösbar, insbesondere in Form einer Verschraubung. Die eigentliche Adaption an unterschiedliche Anbauchassis kann dadurch vom Zugkopfhersteller weg zu späteren Produktionsstufen verlagert werden. Hierdurch können der Adapter und das Adaptionsverfahren optimal den jeweiligen Fertigungs- und Produktionsanforderungen bei einem Großserienhersteller für den Zugkopf einerseits und bei einem Kleinserien- oder Individualhersteller für den Zusammenbau von Zugkopf und Anbauchassis oder für das komplette Fahrzeug samt Aufbau andererseits Rechnung tragen.

Grundsätzlich kann der Adapter aus mehreren unterschiedlichen und verschieden kombinierbaren Adapterteilen bestehen. Ein oder mehrere Adapterteile können als Gleichteile und mehrere andere Adapterteile als Wechselteile zur Modularisierung und Adaption an unterschiedliche Anbauchassis ausgebildet sein. Das oder die Gleichteile sind bevorzugt zur Verbindung mit dem Zugkopf und zum Einbau an dessen Fahrgestell, insbesondere an einem Längsholm mit einem Profil vorgesehen und ausgebildet. Sie können das vorerwähnte einheitliche Oberteil bilden.

Die Einheitlichkeit der Gleichteile kann für einen Typ des Zugkopfs bestehen, der z.B. von einem einzelnen oder von verschiedenen Fahrzeughersteller(n) stammt. Die Wechselteile können zur Modularisierung und Adaption unterschiedlicher Anbauchassis für diesen Zugkopf dienen. Vorzugsweise werden die Zugköpfe verschiedener Fahrzeughersteller hinsichtlich der Lage und Ausbildung der dortigen Anbaustelle am Fahrgestell vereinheitlicht. Für den Fall unterschiedlicher Zugköpfe und Anbaustellen können die einheitlichen Gleichteile hieran angepasst werden.

Die Wechselteile können zusammen einen wannenförmigen Unterzug bilden, der über die besagte Schnittstelle mit den Gleichteilen verbunden werden kann. Der Unterzug kann das Hutprofil des Längsholms unter Bildung eines umfangseitig geschlossenen Kastenträgers komplettieren.

Die als Wechselteil ausgebildeten Adapterteile können zumindest teilweise für die verschiedenen Adaptervarianten einheitlich sein. Dies kann insbesondere bei Unterzugschalen der Fall sein. Diese sind an einem hinteren Bereich mit dem Steg eines Längsträgers des Anbauchassis verbindbar und bilden am vorderen Bereich in einer geeigneten Formgebung und Verbindung miteinander den erwähnten wannenförmigen Unterzug. Je nach Art des Anbauchassis, insbesondere dessen Traglast, können die Unterzugschalen durch ein oder mehrere weitere Anbauteile ergänzt werden. Dies kann z.B. ein Aufsatzblech zur Unterfütterung und Abstützung einer Unterzugschale an der Verbindungsstelle mit dem Trägersteg sein. Alternativ oder zusätzlich kann ein Stützblech vorgesehen sein, das bedarfsweise den Längsträger, insbesondere dessen Trägersteg an der Verbindungsstelle mit dem Adapter verstärkt und eventuell auch den Adapter selbst, insbesondere an der Verbindungsstelle zwischen den Unterzugschalen, verstärkt. Ein oder mehrere Verstärkungsbleche können den Längsträger und/oder andere Adapterteile, insbesondere im Unterzugbereich, verstärken und in Form halten. Insbesondere die Wannenform des Unterzugs kann dadurch stabilisiert werden. Zur Bildung der Wannenform kann zumindest eine Unterzugschale einen Seitenversatz oder eine seitliche Kröpfung aufweisen.

Der Adapter kann durch entsprechende Wahl und Ausbildung der wechselbaren Adapterteile, insbesondere des Unterteils, unterschiedliche Höhenversätze zwischen dem Fahrgestell des Zugkopfes und dem Anbauchassis überbrücken. Dies ist z.B. günstig, um ein tiefergelegtes Anbauchassis an den Zugkopf anschließen zu können, welches durch die Tieferlegung zusätzliche Stauräume im Unterbodenbereich aufweist oder einen komfortableren Einstieg ermöglicht.

Der Adapter kann mit dem Fahrgestell des Zugkopfs über eine Anbaustelle verbunden werden. Diese Anbaustelle befindet sich vorzugsweise in bevorzugt vertikaler Projektionsrichtung direkt unter der Kabine des Zugkopfes. Dadurch kann das Anbauchassis unmittelbar anschließend an den Zugkopf montiert werden. Insbesondere können die Längstragelemente des Anbauchassis weiter unter die Kabine und an oder in den Zugkopf hineinragen. Dies ist einerseits für die Gesamtstabilität und Festigkeit des Verbundes und des Fahrzeuges von Vorteil. Andererseits ergeben sich für den Aufbauhersteller bzw. den Endhersteller des Fahrzeuges, z.B. eines Wohnmobils, Verkaufmobils oder dergleichen, technische und wirtschaftliche Vorteile. Der Anschlussbereich zwischen der Kabine des Zugkopfes und dem Aufbau kann vereinheitlicht werden. Die Kabine kann auch leichter in einen Aufbau integriert werden.

In den Unteransprüchen sind weitere vorteilhafte Ausgestaltungen der Erfindung angegeben.

Ausgestaltungen der beanspruchten Adaptionstechnik können folgende Merkmale einzeln oder in Kombination aufweisen.

Das Oberteil (20) des Adapters (4) ist zum herstellerseitigen Einbau am Zugkopf (2) vorgesehen und ausgebildet.

Das Unterteil (21) des Adapters (4) weist einen variablen Höhenversatz (37) auf.

Als Gleichteile ausgebildete Adapterteile (22,23,24) des Adapters (4), insbesondere seines Oberteils (20), sind zur Befestigung, insbesondere Schweißbefestigung, an einem Fahrgestell (7), insbesondere an einem Längsholm (8), des Zugkopfs (2) vorgesehen und ausgebildet.

Als Wechselteile ausgebildete Adapterteile (25-31) des Adapters (4), insbesondere seines Unterteils (21), sind zur bevorzugt schweißfreien Befestigung, insbesondere Schraubbefestigung, am Anbauchassis (3), insbesondere an einem Längsträger (15) des Anbauchassis (3), vorgesehen und ausgebildet.

Die als Gleichteile ausgebildete Adapterteile (22,23,24) und die als Wechselteile ausgebildeten Adapterteile (25-31) des Adapters (4), insbesondere seines Oberteils (20) und seines Unterteils (21), sind an einer Schnittstelle (40) fest oder bevorzugt lösbar miteinander über eine bevorzugt schweißfreie Befestigung (38), insbesondere eine Verschraubung, verbindbar oder verbunden.

Die als Gleichteile ausgebildete Adapterteile (22,23,24) bilden ein Oberteil (20) und die als Wechselteile ausgebildete Adapterteile (25-31) bilden ein Unterteil (21), insbesondere einen wannenförmigen Unterzug.

Ein Adapterteil (23) des Oberteils (20) ist als Topfblech ausgebildet.

Die Adapterteile (22,23) des Oberteils (20) sind an ein Hutprofil eines Längsholms (8) des Zugkopfs (2) adaptiert.

Ein als Unterzugschale ausgebildetes Adapterteil (26) des Unterteils (21) weist einen Seitenversatz oder eine seitliche Kröpfung (32) auf.

Als Unterzugschalen ausgebildeten Adapterteile (25,26) des Unterteils (21) weisen einen in Fahrtrichtung (14) gesehen hinteren Bereich zum Anschluss an einen Längsträger (15) des Anbauchassis (3) und einen vorderen Bereich zum Anschluss an das Adapterteil (22), insbesondere das Deckblech, auf.

Als Unterzugschalen ausgebildeten Adapterteile (25,26) des Unterteils (21) ragen an einem vorderen Bereich über das Vorderende eines Längsträgers (15) des Anbauchassis (3) hinaus und sind hier über eingezogene Verbindungsstege (33) miteinander verbindbar oder verbunden.

Ein Adapterteil (27) des Unterteils (21) ist als Aufsatzblech für ein anderes Adapterteil (25,26), insbesondere eine Unterzugschale, ausgebildet.

Ein Adapterteil (28) des Unterteils (21) ist als Stützblech für den Längsträger (15) und/oder für ein anderes Adapterteil (25,26), insbesondere eine Unterzugschale, ausgebildet.

Ein Adapterteil (31) des Unterteils (21) ist als Anschluss für einen Querträger ausgebildet.

Ein oder mehrere der als Wechselteile ausgebildeten Adapterteile (25-31) des Unterteils (21), insbesondere die Unterzugschale(n) (25,26), ist/sind bei verschiedenen Adaptervarianten gleich.

Ausgestaltungen des beanspruchten Zugkopfs, Anbauchassis und Fahrzeugs können folgende Merkmale einzeln oder in Kombination aufweisen.

Der motorisierte, vorzugsweise frontgetriebene Zugkopf (2) weist eine Kabine (5) auf, wobei die Anbaustelle (13) für den Adapter (4) in der Projektion unterhalb der Kabine (5) angeordnet ist. Diese Ausgestaltung hat eigenständige erfinderische Bedeutung. Sie kann auch bei einem motorisierten, vorzugsweise frontgetriebenen Zugkopf mit einem beliebigen anderen Adapter zur Verbindung mit einem Anbauchassis (3) eingesetzt werden.

Der Adapter (4) und ggf. das Anbauchassis (3) reichen beim motorisierten, vorzugsweise frontgetriebenen Zugkopf in Fahrtrichtung (14) bis unter die Kabine (5).

Das Anbauchassis (3) weist mehrere, insbesondere zwei parallele, profilierte Längsträger (15) mit einem einfach oder mehrfach abgewinkelten Querschnitt, insbesondere einem C-förmigen Querschnitt, auf.

Ein Fahrzeug, insbesondere Straßenfahrzeug, weist einen motorisierten, vorzugsweise frontgetriebenen Zugkopf (2) der beanspruchten Art und ein Anbauchassis (3) der beanspruchten Art mit einem beanspruchten Adapter (4) zur Verbindung von Zugkopf (2) und Anbauchassis (3) auf.

Die Erfindung ist in den Zeichnungen beispielhaft und schematisch dargestellt. Im Einzelnen zeigen:
- Figur 1 und 2:: Einen Zugkopf und ein Anbauchassis mit einer ersten Variante eines Adapters in einer abgebrochenen Seitenansicht und Draufsicht,
- Figur 3:: den Adapter von Figur 1 und dessen Adapterteile in einer Explosionsdarstellung,
- Figur 4 bis 6:: eine Abfolge von Montageschritten zur Bildung des Adapters und dessen Montage am Fahrgestell des Zugkopfes
- Figur 7:: eine abgebrochene perspektivische Ansicht des Adapters in Anbaustellung
- Figur 8:: eine Stirnansicht des Adapters in Fahrtrichtung gesehen,
- Figur 9 bis 12:: verschiedene Frontansichten des Adapters gegen die Fahrtrichtung gesehen,
- Figur 13:: einen Zugkopf mit Anbauchassis und einer zweiten Adaptervariante in abgebrochener Seitenansicht,
- Figur 14:: eine Explosionsdarstellung der Adapterteile,
- Figur 15 und 16:: einen Zusammenbau des Adapters von Figur 13 und 14 in zwei Schritten,
- Figur 17:: eine abgebrochene perspektivische Darstellung des Adapters in Anbaustellung,
- Figur 18 und 19:: Frontansichten der zweiten Adaptervariante gegen die Fahrtrichtung gesehen,
- Figur 20:: einen Zugkopf mit einem Anbauchassis und einer dritten Adaptervariante in einer abgebrochenen Seitenansicht,
- Figur 21:: eine Explosionsdarstellung der Adapterteile des Adapters von Figur 20,
- Figur 22 und 23:: einen Zusammenbau des Adapters in zwei Schritten,
- Figur 24:: eine abgebrochene perspektivische Darstellung der dritten Adaptervariante in Anbaustellung und
- Figur 25 und 26:: perspektivische Frontansicht der dritten Adaptervariante gegen die Fahrtrichtung gesehen.

Die Erfindung betrifft einen Adapter (4) und ein Adaptionsverfahren zur Verbindung eines motorisierten Zugkopfs (2) mit einem Anbauchassis (3). Die Erfindung betrifft ferner ein Anbauchassis (3) mit einem Adapter (4) und im Weiteren auch ein Fahrzeug (1), insbesondere ein Straßenfahrzeug, mit einem motorisierten und vorzugsweise frontgetriebenen Zugkopf (2) mit einem Anbauchassis (3) und einem Adapter (4).

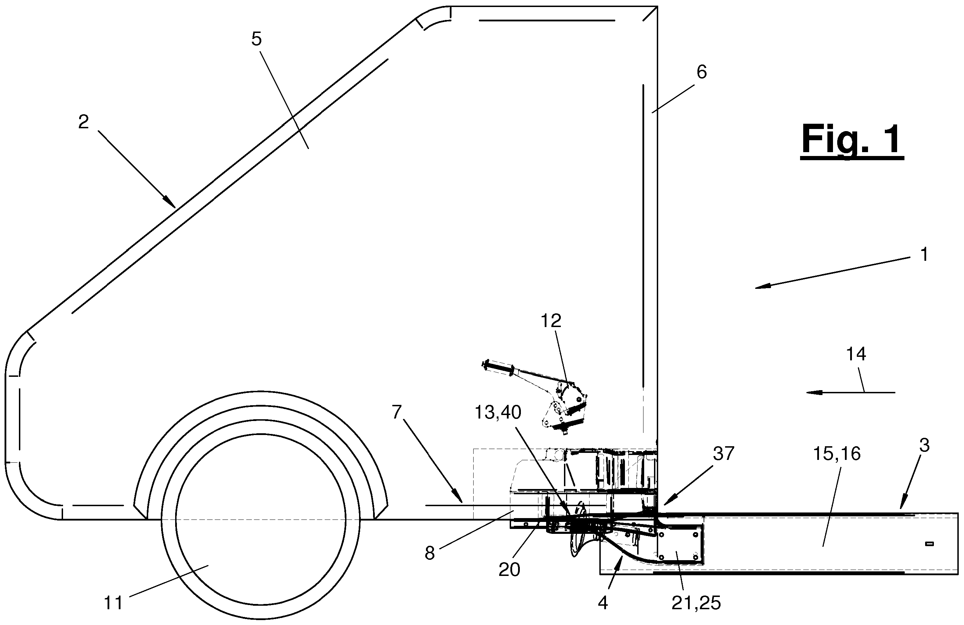

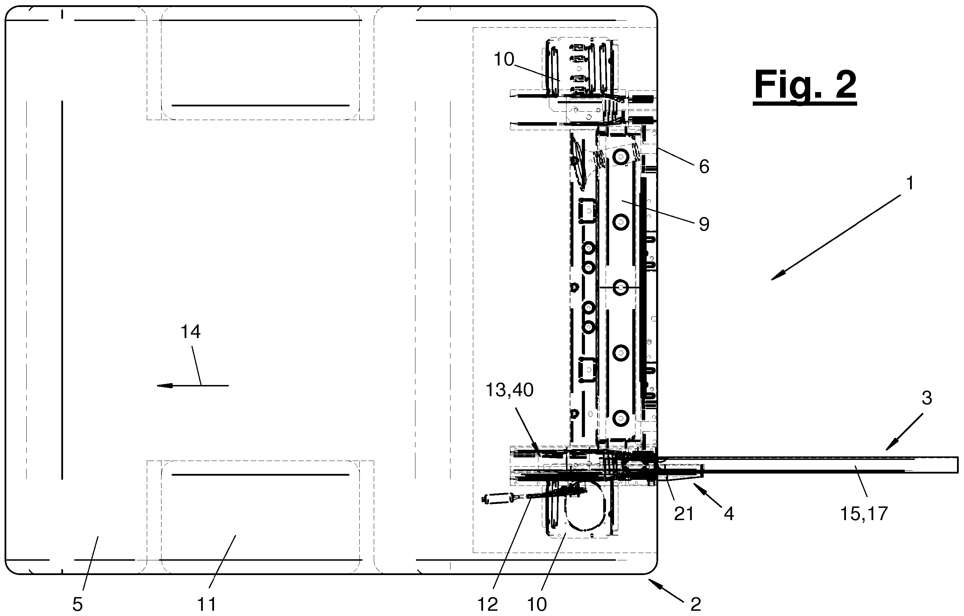

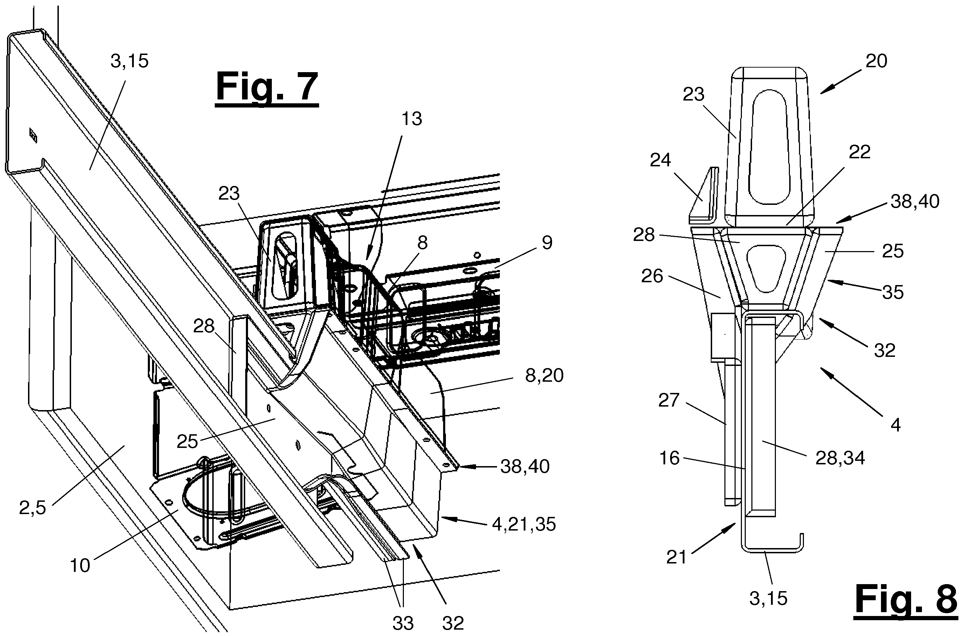

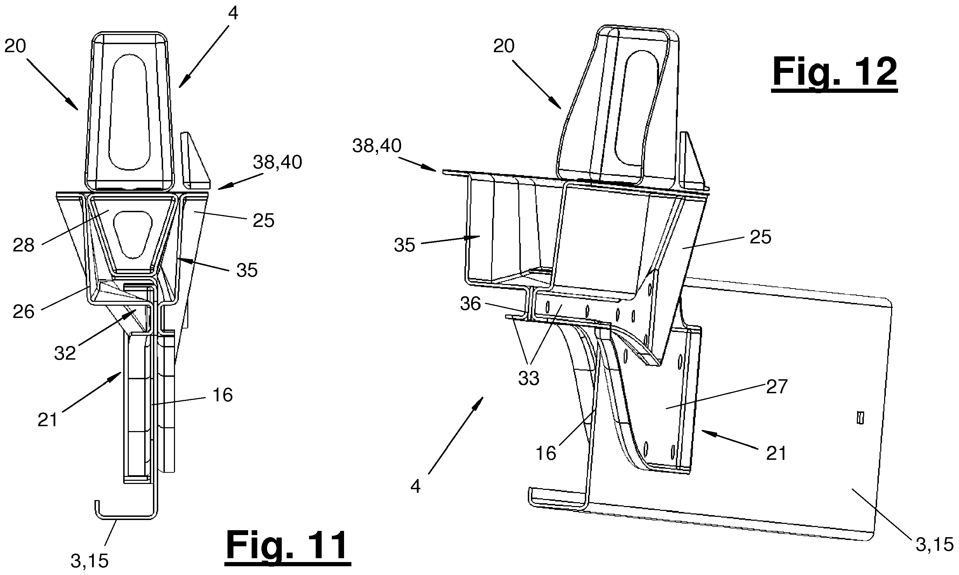

Der Adapter (4) ist mehrteilig und modular ausgebildet. Er ist für eine Anpassung an unterschiedliche Anbauchassis (3) vorgesehen und ausgebildet. Figur 1 bis 12 verdeutlichen eine erste Variante des Adapters (4). Sie ist z.B. für den Einsatz bei einem Nutzfahrzeug und einer erhöhten Traglast bzw. einem höheren zulässigen Gesamtgewicht des Fahrzeugs (1) vorgesehen, z.B. für mehr als 3,5 t.

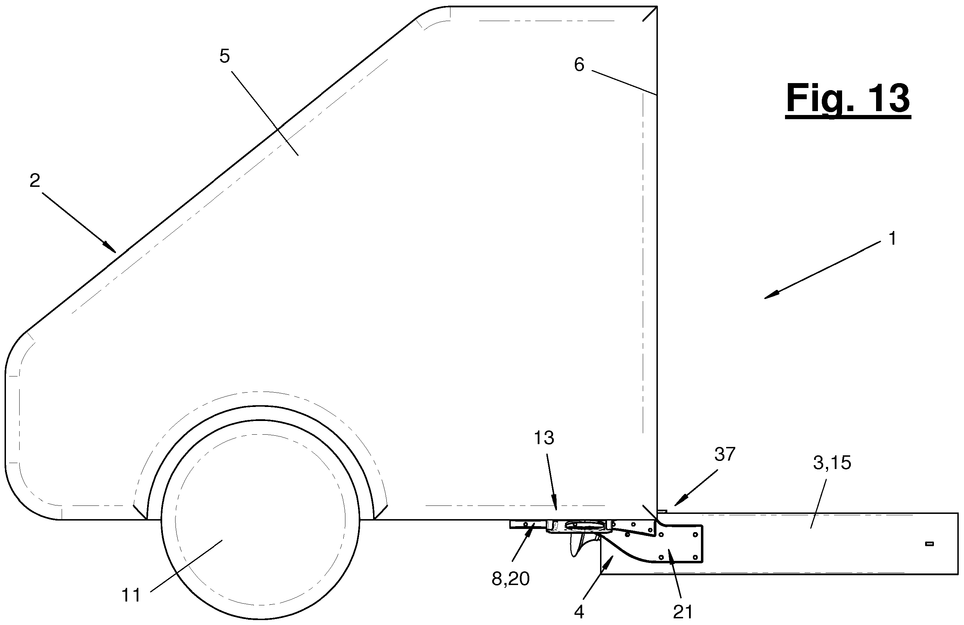

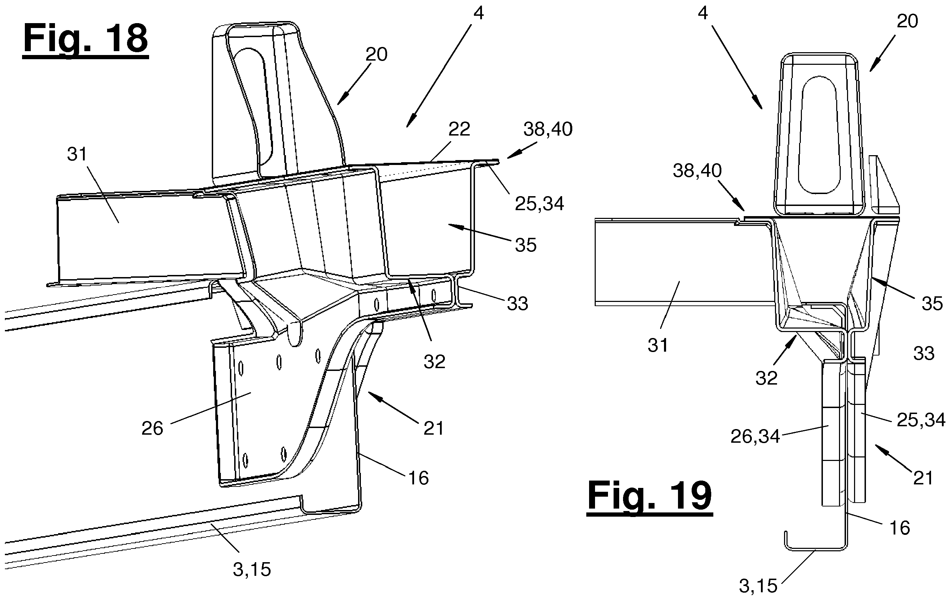

Figur 13 bis 19 zeigen eine zweite Variante des Adapters (4), die z.B. für ein Straßenfahrzeug (1) in der Ausbildung als Wohnmobil oder Verkaufsmobil vorgesehen ist, welches vorzugsweise maximal 3,5 t Traglast bzw. zulässiges Gesamtgewicht hat.

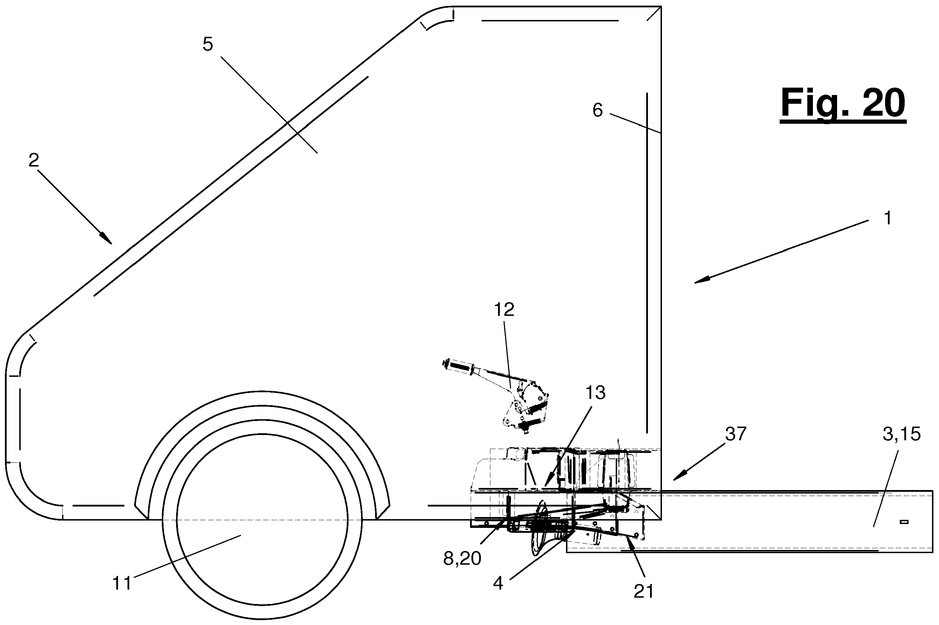

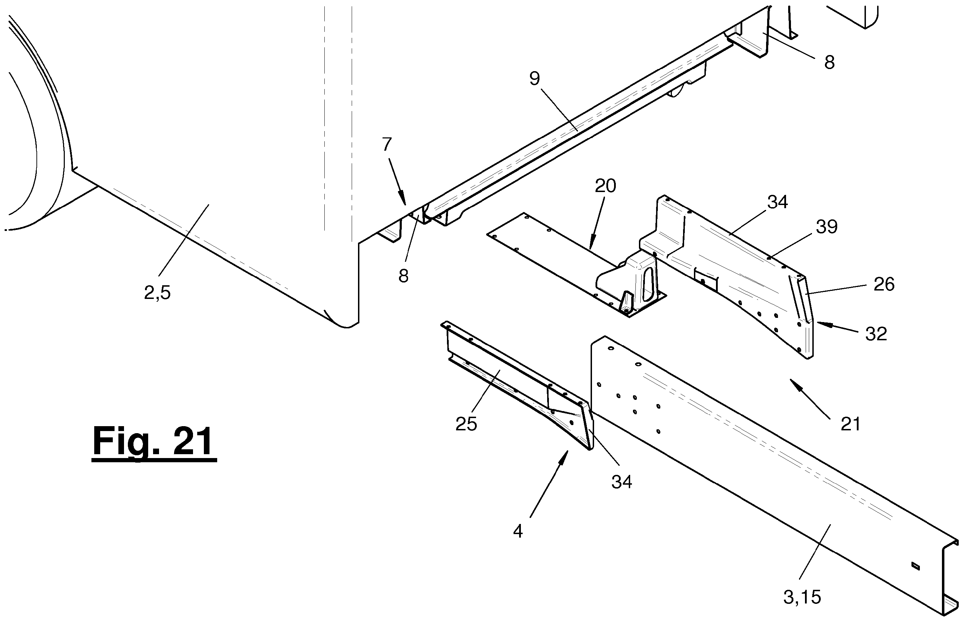

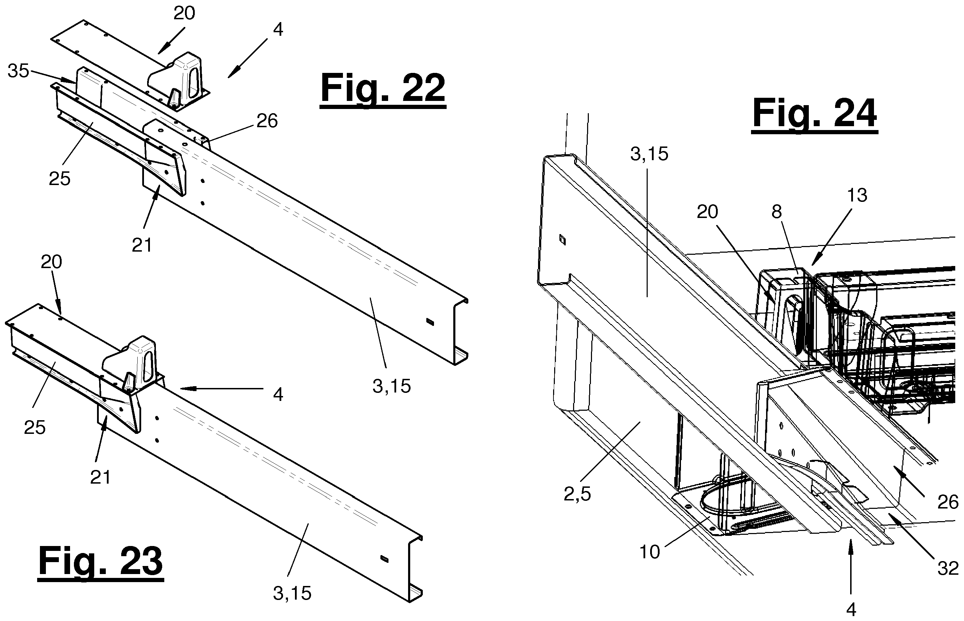

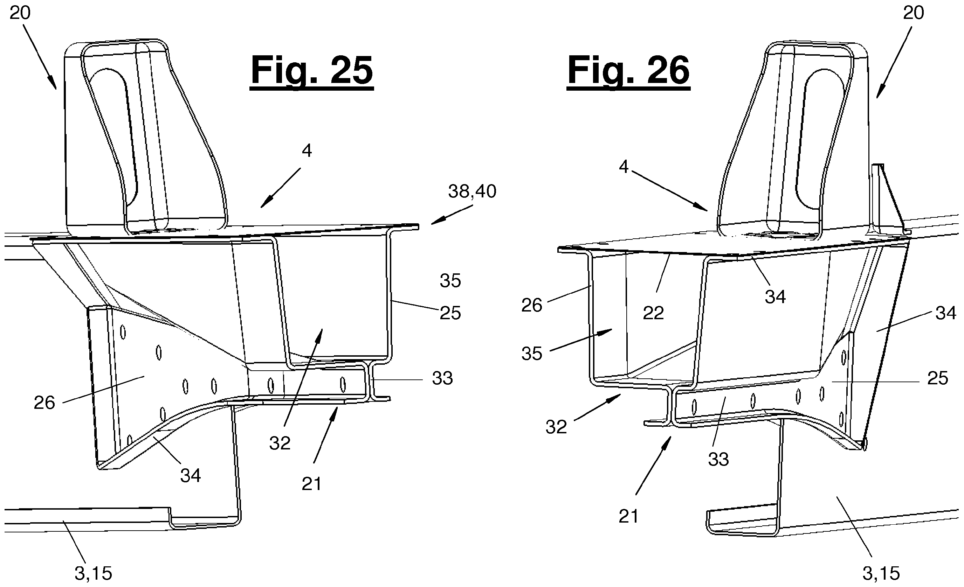

Eine dritte Adaptervariante ist in Figur 20 bis 26 dargestellt. Sie kann ebenfalls für ein Wohnmobil oder ein Verkaufsfahrzeug oder dergleichen mit der genannten Traglast bzw. Gesamtgewicht von bis zu 3,5 t vorgesehen sein. Die zweite und dritte Adaptervariante können sich in mehrfacher Hinsicht, z.B. durch einen unterschiedlichen Höhenversatz (37) des Anbauchassis (3) unterscheiden.

Das besagte Fahrzeug (1) ist als Straßenfahrzeug ausgebildet. Es besteht aus dem motorisierten Zugkopf (2), dem mittels Adaptern (4) angeschlossenen Anbauchassis (3) und einen der Übersicht halber nicht dargestellten Aufbau. Der Zugkopf (2) weist vorzugsweise einen Frontantrieb mit einem Motor, einem Getriebe und einer angetriebenen Vorderachse mit Rädern auf. Das Anbauchassis (3) kann mit einer hinteren Achsanordnung (nicht dargestellt) ausgerüstet sein. Dies kann z.B. eine Einzelachse, Tandemachse oder Trippelachse sein. Vorzugsweise handelt es sich hierbei um eine Schleppachse, die nicht mit Fahrantrieb im Zugkopf (2) verbunden ist. Alternativ kann die Achse angetrieben sein. Das Anbauchassis (3) kann weitere Teile, wie eine Heckverländerung, Reserveradhalter etc. aufweisen.

Der Zugkopf (2) besitzt ein Fahrgestell (7), welches mehrere, vorzugsweise zwei Längsholme (8) aufweist, die sich gegen die Vorwärts-Fahrtrichtung (14) erstrecken. Die Längsholme (8) sind z.B. als nach unten offene Hutprofile ausgebildet. Sie können alternativ eine andere Querschnittsform haben. Zwischen den Längsholmen (8) kann eine Quertraverse (9) angeordnet sein. Ferner sind ein Tank, eine Auspuffanlage und weitere Fahrzeugkomponenten vorhanden.

Der Zugkopf (2), der auch als Triebkopf bezeichnet wird, besitzt eine Kabine (5), in der eine Lenkeinrichtung, eine Sitzgelegenheit und eine Handbremse (12) untergebracht sind. Die Kabine (5) besitzt eine Rückwand (6). Die Kabine (5) kann ein separates und am Zugkopf (2) vorhandenes Bauteil sein. Sie kann alternaiv integraler Bestandteil eines Aufbaus, insbesondere für ein Wohnmobil, sein. Die Kabine (5) kann B-Säulen (10) aufweisen, die an das Fahrgestell (7) angebunden sind. In den Zeichnungen sind die Anbindestellen dargestellt. Je nach Fahrzeugauslegung kann zur Verstärkung an einer B-Säule (10) oder an einer Anbindestelle zum Fahrwerk (7) ein Verstärkungsblech angeschweißt sein.

Wie Figur 1, 13 und 20 verdeutlichen, ist bei den verschiedenen Adaptervarianten der Adapter (4) jeweils an einer Anbaustelle mit dem Fahrgestell (7), insbesondere dem jeweiligen Längsholm (8) verbunden. Diese Anbaustelle (13) befindet sich in Projektionsrichtung unterhalb der Kabine (5). Die Anbaustelle (13) ist bevorzugt in Fahrtrichtung (14) vor der Kabinenrückwand (6) angeordnet. Über die Kabinenrückwand (6) ragt nach hinten vorzugsweise nur der Adapter (4) hinaus. Die Längsholme (8) enden vorzugsweise an oder vor der Kabinenrückwand (6). Der Adapter (4) und ggf. das Anbauchassis (3) reichen bei den verschiedenen Varianten in Fahrtrichtung (14) bis unter die Kabine (5).

Der mehrteilige und modulare Adapter (4) gliedert sich in den gezeigten drei Varianten jeweils in ein Oberteil (20) und ein Unterteil (21). Das Oberteil (20) ist für die verschiedenen Adaptervarianten einheitlich ausgebildet. Es ist zur Befestigung, insbesondere zur Schweißbefestigung, am Fahrgestell (7), insbesondere an einem Längsholm (8), vorgesehen und ausgebildet. Die Befestigung kann z.B. Durch Punktschweißen an den Randflanschen des Hutprofils erfolgen, wobei die diskreten Schweißpunkte in Profillängsrichtung voneinander distanziert sind. Das Oberteil (20) kann zum Einbau am Zugkopf (2) durch den Zugkopfhersteller vorgesehen und ausgebildet sein. Alternativ kann der Einbau an einer anderen Stelle in der nachgeschalteten Produktionskette bei der Herstellung des kompletten Fahrzeugs (1) erfolgen.

Das variable Unterteil (21) ist zur Adaption an unterschiedliche Anbauchassis (3) vorgesehen. Die verschiedenen Adaptervarianten unterscheiden sich durch ihre Unterteile (21). Das Unterteil (21) ist zur bevorzugt schweißfreien Befestigung, insbesondere Schraubbefestigung, am Anbauchassis (3) vorgesehen und ausgebildet. Die Befestigung erfolgt vorzugsweise an einem Längsträger (15) des Anbauchassis (3).

Das Oberteil (20) und das Unterteil (21) sind in den gezeigten Ausführungsbeispielen übereinander angeordnet und werden an einer Schnittstelle (40) fest oder bevorzugt lösbar miteinander über eine Befestigung (38) verbunden. Dies ist vorzugsweise eine Verschraubung. Die Schnittstelle (40) ist liegend, insbesondere horizontal angeordnet. Sie erstreckt sich mit ihrer Hauptebene in Fahrtrichtung (14). Die Befestigung (38) erfolgt über mehrere diskrete Befestigungsstellen (39), insbesondere Schraubstellen. Diese sind jeweils zwischen den vorgenannten Schweißpunkten angeordnet.

Der Adapater (4) weist ein oder mehrere als Gleichteile ausgebildete Adapterteile (22,23,24) auf. Diese können das vorgenannte einheitliche Oberteil (20) bilden. Dies ist allerdings nicht unbedingt erforderlich. Die als Gleichteile ausgebildeten Adapterteile (22,23,24) sind zur Befestigung, insbesondere Schweißbefestigung, an einem Fahrgestell, insbesondere an einem Längsholm (8), vorgesehen und ausgebildet.

Der Adapter (4) weist ferner ein oder mehrere andere und als Wechselteile ausgebildete Adapterteile (25 bis 31) auf, die zur Anpassung an unterschiedliche Anbauchassis (3) vorgesehen und ausgebildet sind. Die als Wechselteile ausgebildeten Adapterteile (25 bis 31) können das vorerwähnte variable Unterteil (21) bilden. Dies ist allerdings nicht unbedingt erforderlich. Es sind auch andere Ausgestaltungen möglich. Die als Wechselteile ausgebildeten Adapterteile (25 bis 31) sind zur vorzugsweise schweißfreien Befestigung, insbesondere Schraubbefestigung, am Anbauchassis (3), insbesondere an einem Längsträger (15), vorgesehen und ausgebildet. Die als Gleichteile ausgebildeten Adapterteile (22,23,24) und die als Wechselteile ausgebildeten Adapterteile (25 bis 31) können an der Schnittstelle (40) fest oder bevorzugt lösbar miteinander über eine schweißfreie Befestigung (38), vorzugsweise eine Verschraubung verbunden werden.

Das variable Unterteil (21) bzw. die als Wechselteile ausgebildeten Adapterteile (25 bis 31) ist/sind an unterschiedliche Anbauchassis (3) adaptierbar ausgebildet. In den gezeigten Adaptervarianten kommen hierbei unterschiedliche Adapterteile (25 bis 31) zum Einsatz. Über das Unterteil (21) können unterschiedliche Höhenversätze (37) des Adapters (4) zwischen Fahrgestell (7) und Anbauchassis (3) realisiert werden.

Das Unterteil (21) ist vorzugsweise als Unterzug zur Komplettierung des Längsholms (8), insbesondere seines Hutprofils und zur gemeinsamen Bildung eines kastenförmigen Trägers mit bevorzugt umlaufender Wandung ausgebildet. Das Unterteil (21) weist dabei bereichsweise eine nach oben offene Wannenform (35) auf. Diese ergänzt das nach unten offene Hutprofil und wird mit diesem über die Schnittstelle (40) verbunden.

Das Unterteil (21) ist ferner dazu ausgebildet, einen aufrechten Trägersteg (16) an einem Längsträger (15) des Anbauchassis (3) beidseits einzuspannen und hier durch die besagte Verschraubung befestigt zu werden.

Das Chassis (3) weist mehrere, vorzugsweise, parallele Längsträger (15) auf. Ferner können ein oder mehrere Querträger oder Quertraversen (nicht dargestellt), zur Bildung eines querversteiften Chassisrahmens vorgesehen sein. Die Längsträger (15) sind als gerade oder stellenweise ausgebogene Profile aus Metall, insbesondere Stahl, ausgebildet und haben einen einfach oder mehrfach abgewinkelten Querschnitt. In den gezeigten Ausführungsbeispielen haben sie jeweils einen C-förmigen Querschnitt mit einem aufrechten Trägersteg (16) sowie einem oberen Quergurt (17) und einem unteren Quergurt (18). Das Längsträgerprofil ist entsprechend an seinen oberen und unteren Rändern abgekantet. An dem in Fahrtrichtung (14) vorderen Endbereich kann im Bereich des Obergurts (17) eine Ausklinkung (19) vorhanden sein, die den Anbau des Adapters (4) erleichtert. Die Längsträger (15) sind derart angeordnet und ausgerichtet, dass ihre offene Seite zur Fahrzeugmitte weist.

Bei der in Figur 1 bis 12 dargestellten ersten Adaptervariante, die bevorzugt für ein Nutzfahrzeug vorgesehen ist, bietet der Adapter (4) einen größeren Höhenversatz (37). Das Unterteil (21) des Adapters (4) ist hierfür entsprechend ausgebildet.

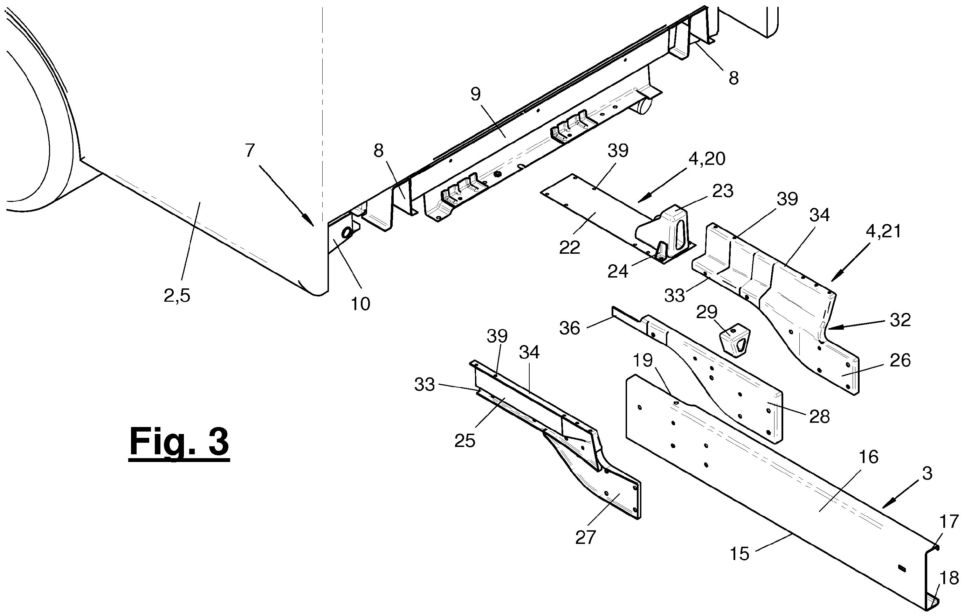

Figur 3 zeigt in einer Explosionsdarstellung die Adapterteile des Adapters (4). Sie sind als verformte Blechteile aus Metall, insbesondere Stahl, ausgebildet. Die als Gleichteil ausgebildeten und das Oberteil (20) bildenden Adapterteile (22,23,24) sind z.B. bereits gefügt. Das Adapterteil (22) ist als bevorzugt plattenförmiges Deckblech ausgebildet, welches auch die Schnittstelle (40) für den Anbau des Unterteils (21) bzw. der als Wechselteile ausgebildeten Adapterteile (25-31) bildet. Das Adapterteil (22) wird in der vorerwähnten Weise mit dem Längsprofil (8), insbesondere den Randflanschen seines Hutprofils durch Punktschweißen verbunden. Das Adapterteil (22) schließt dadurch das Hutprofil nach unten ab.

Das Adapterteil (23) ist als Topfblech ausgebildet, welches eine sockelartige hochstehende Form hat und ebenfalls der Verbindung mit einem Längsholm (8) dient. Das abgekantete Topfblech (23) kann in die stirnseitige Öffnung des Hutprofils eingesetzt werden und ist an dessen Innenquerschnitt angepasst, wobei es eine formschlüssige Führung bietet. Die Seitenwände des Hutprofils und das Topfblech (23) können ebenfalls fest verbunden, insbesondere verschweißt sein.

Das Topfblech (23) ist am rückwärtigen Ende des Deckblechs (22) angeordnet und mit diesem fest verbunden, insbesondere verschweißt. Seitlich neben dem Topfblech (23) kann ein als Knotenblech ausgebildetes Adapterteil (24) angeordnet sein. Es kann zur Befestigung weiterer Adapterteile dienen.

Die vorgenannten Adapterteile (22,23,24) bilden miteinander das Oberteil (20). Die Adapterteile (22,23,24) können für alle Adaptervarianten gleich sein.

Das Unterteil (21) besteht in der ersten Adaptervariante aus fünf Adapterteilen (25 bis 29).
Die Adapterteile (25,26) sind als äußere und innere Unterzugschalen ausgebildet und weisen einen umgebogenen Randflansch (34) auf. Das als innere Unterzugschale ausgebildete Adapterteil (26) wird in dem Hohlraum des Längsträgers (15) eingesetzt und weist einen Seitenversatz oder eine seitliche Kröpfung (32) auf. Die innere Unterzugschale (26) weist in Fahrtrichtung (14) gesehen einen hinteren Bereich auf, der plattenförmig mit Randflansch (34) ausgebildet ist und zur Anlage und Befestigung am Trägersteg (16) dient. Der vordere Bereich der Unterzugschale (26) ist nach oben und seitlich versetzt (32). Er dient zum Anschluss an das Adapterteil (22), insbesondere das Deckblech.

Die äußere Unterzugschale (25) ist in der gezeigten Ausführungsform ebenfalls am hinteren Bereich mit einer ebenen Anlage- und Befestigungsfläche für den Trägersteg (16) versehen und ist mit seinem vorderen Bereich zum Anschluss an das besagte Adapterteil (22) ausgebildet. In der gezeigten Ausführungsform ist unter der äußeren Unterzugschale (25) ein Aufsatzblech (27) angeordnet, welches ebenfalls mit der Außenseite des Trägerstegs (16) verbunden ist und die Unterzugschale (25) von unten zusätzlich stützt. Über die Adapterteile (25,26,27) werden der besagte Höhenversatz (37) gebildet.

Die als Unterzugschale ausgebildeten Adapterteile (25,26) ragen an ihrem jeweils vorderen Bereich über das Vorderende des Längsträgers (15) hinaus und besitzen jeweils einen eingezogenen oder abgekanteten Verbindungssteg (33), an dem sie miteinander vorzugsweise schweißfrei, insbesondere durch eine Verschraubung, verbunden werden können. Sie bilden dabei das nach oben offene Wannenprofil (35) des Unterzugs (21).

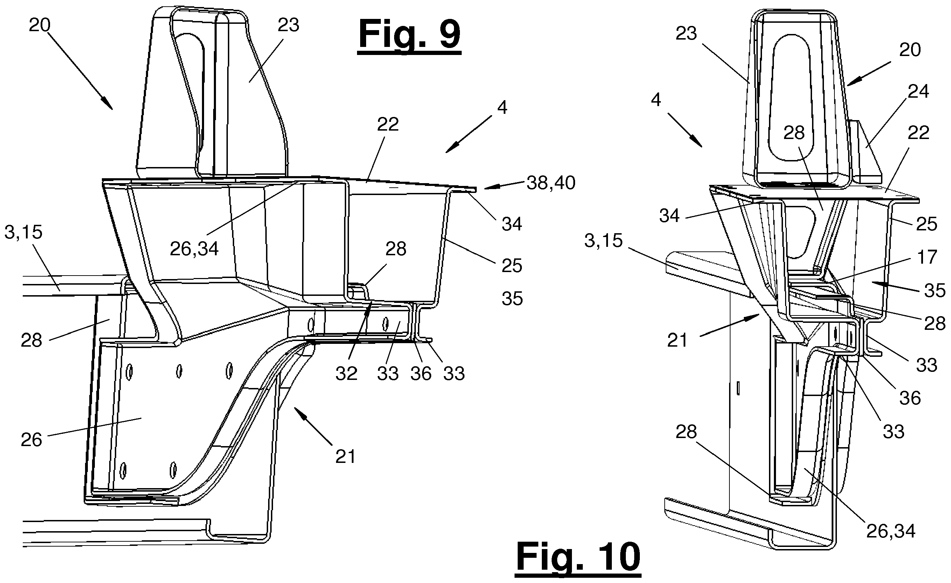

Das Unterteil (21) kann ferner ein Stützblech (28) aufweisen, welches zwischen der inneren Unterzugschale (26) und der Innenseite des Trägerstegs (16) angeordnet und befestigt wird und welches mit einer axialen Zunge (36) zwischen die Verbindungsstege (33) reicht. Figur 9 und 10 zeigen diese Anordnung.

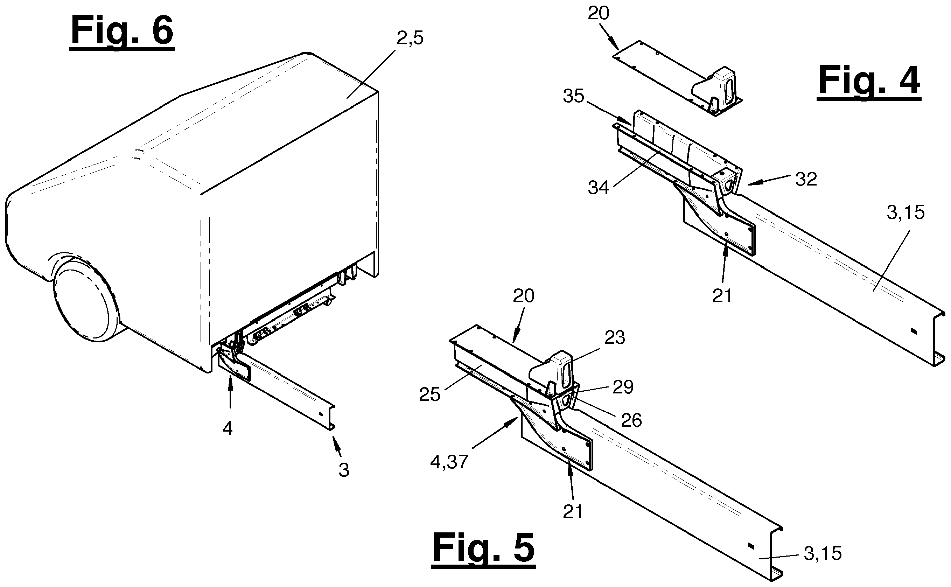

Das Unterteil (21) beinhaltet ferner ein als topfförmiges Verstärkungsblech ausgebildetes Adapterteil (29), welches am rückwärtigen Ende der Unterzugschalen (25,26) im Bereich des Wannenprofils (35) eingesetzt und befestigt wird. Figur 4 und 5 zeigen die Anordnung. Das Verstärkungsblech (29) befindet sich unter dem Topfblech (23) des Oberteils (20).

Die zweite Adaptervariante von Figur 13 bis 19 hat das gleiche Oberteil (20) und die gleichen Adapterteile (22 bis 24) wie bei der ersten Variante.

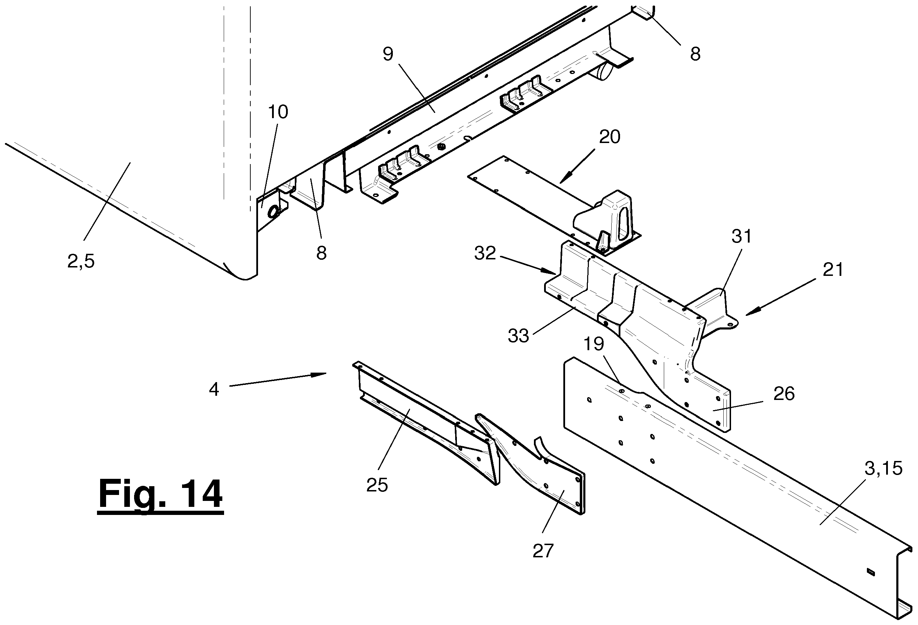

Auch beim variablen Unterteil (21) gibt es einige Übereinstimmungen. Insbesondere die Unterzugschalen (25,26) sind in gleicher Weise wie bei der ersten Variante ausgebildet. In der Explosionsdarstellung von Figur 14 ist außerdem das separat dargestellte Aufsatzblech (27) für die äußere Unterzugschale (25) ersichtlich.

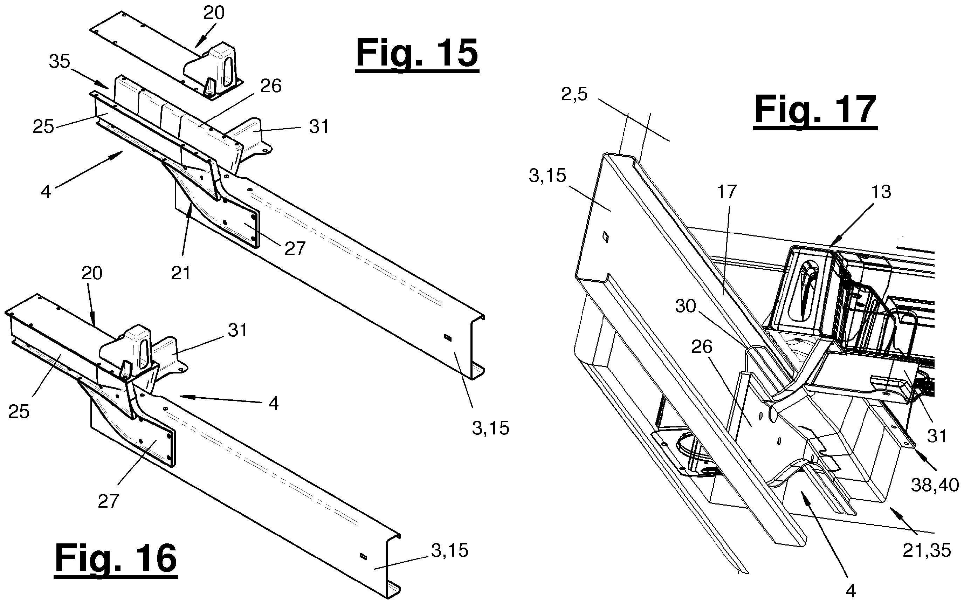

Bei der zweiten Adaptervariante, die vorzugsweise für ein Wohnmobil oder ein Verkaufsmobil mit einem niedrigeren zulässigen Gesamtgewicht vorgesehen ist, können im Vergleich zur ersten Adaptervariante das Stützblech (28) und das topfförmige Verstärkungsblech (29) fehlen. Andererseits kann ein als abgekantetes Verstärkungsblech ausgebildetes Adapterteil (30) vorhanden sein. Gemäß Figur 17 ist es am vorderen Bereich des Längsträgers (15) unter dem Obergurt (17) zur Trägerverstärkung eingesetzt.

Bei der zweiten Adaptervariante ist am Adapter (4), insbesondere am Unterteil (21), ein weiteres Adapterteil (31) seitlich angeordnet, welches als Anschluss für einen Querträger im Chassisbereich ausgebildet ist und quer von der inneren Unterzugschale (26) absteht. Die Adapterteile (26, 31) können lösbar verbunden, insbesondere verschraubt sein. Das als Querträgeranschluss ausgebildete Adapterteil (31) kann auch bei der ersten Adaptervariante zusätzlich vorhanden sein.

In der dritten Adaptervariante von Figur 20 bis 26 sind wiederum die Adapterteile (22 bis 24) und das Oberteil (20) gleich ausgebildet. Die äußere Unterzugschale (25) hat die gleiche Ausbildung wie in den beiden ersten Varianten. Die innere Unterzugschale (26) ist im hinteren Bereich abgewandelt und weist im vorderen Bereich den vorbeschriebenen Seitenversatz (32) auf. In allen drei Adaptervarianten bilden die Unterzugschalen (25,26) mit ihren Verbindungsstegen (33) das nach oben offene Wannenprofil (35) für den Unterzug (21).

Bei der dritten Variante sind die Unterzugschalen (25,26) jeweils einteilig ausgebildet. Ergänzend kann bei Bedarf ein als Querträgeranschluss ausgebildetes Adapterteil (31) vorhanden sein.

Abwandlungen der gezeigten und beschriebenen Ausführungsformen sind in verschiedener Weise möglich. Insbesondere können die Merkmale der verschiedenen Ausführungsbeispiele und ihrer Abwandlungen beliebig miteinander kombiniert, insbesondere vertauscht werden.

### BEZUGSZEICHENLISTE

- 1: Fahrzeug, Straßenfahrzeug
- 2: Zugkopf, Triebkopf
- 3: Anbauchassis
- 4: Adapter
- 5: Kabine
- 6: Rückwand
- 7: Fahrgestell
- 8: Längsholm, Hutprofil
- 9: Quertraverse
- 10: B-Säule
- 11: Rad
- 12: Handbremse
- 13: Anbaustelle
- 14: Fahrtrichtung
- 15: Längsträger
- 16: Trägersteg
- 17: Quergurt, Obergurt
- 18: Quergurt, Untergurt
- 19: Ausklinkung
- 20: Oberteil
- 21: Unterteil, Unterzug
- 22: Adapterteil, Gleichteil, Deckblech
- 23: Adapterteil, Gleichteil, Topfblech
- 24: Adapterteil, Gleichteil, Knotenblech
- 25: Adapterteil, Wechselteil, Unterzugschale außen
- 26: Adapterteil, Wechselteil, Unterzugschale innen
- 27: Adapterteil, Wechselteil, Aufsatzblech
- 28: Adapterteil, Wechselteil, Stützblech
- 29: Adapterteil, Wechselteil, Verstärkungsblech
- 30: Adapterteil, Wechselteil, Verstärkungsblech
- 31: Adapterteil, Wechselteil, Anschluss Querträger
- 32: Seitenversatz, Kröpfung
- 33: Verbindungssteg
- 34: Randflansch
- 35: Wannenprofil, Hutprofil
- 36: Zunge
- 37: Höhenversatz
- 38: Befestigung, Schraubverbindung
- 39: Befestigungsstelle
- 40: Schnittstelle

## Patentansprüche

1. Adapter zur Verbindung eines motorisierten Zugkopfs (2) mit einem Anbauchassis (3), wobei der Adapter (4) mehrteilig und modular für eine Anpassung an unterschiedliche Anbauchassis (3) ausgebildet ist, wobei der Adapter (4) ein einheitliches Oberteil (20) und ein variables Unterteil (21) aufweist, die an einer Schnittstelle (40) fest oder bevorzugt lösbar miteinander über eine bevorzugt schweißfreie Befestigung (38), insbesondere eine Verschraubung, verbindbar oder verbunden sind, **dadurch gekennzeichnet, dass** das Oberteil (20) ein oder mehrere als Gleichteile ausgebildete Adapterteile (22,23,24) aufweist, wobei ein Adapterteil (22) als bevorzugt plattenförmiges Deckblech ausgebildet ist, welches auch die Schnittstelle (40) für den Anbau des Unterteils (21) bildet.

2. Adapter nach Anspruch 1, **dadurch gekennzeichnet, dass** das Oberteil (20) und das Unterteil (21) übereinander angeordnet sind, wobei die Schnittstelle (40) liegend, insbesondere horizontal, angeordnet ist.

3. Adapter nach Anspruch 1 oder 2, **dadurch gekennzeichnet, dass** das Oberteil (20) zur Befestigung, insbesondere Schweißbefestigung, an einem Fahrgestell (7), insbesondere an einem Längsholm (8) mit einem nach unten offenen Hutprofil, des Zugkopfs (2) vorgesehen und ausgebildet ist und das Unterteil (21) zur bevorzugt schweißfreien Befestigung, insbesondere Schraubbefestigung, am Anbauchassis (3), insbesondere an einem Längsträger (15) des Anbauchassis (3), vorgesehen und ausgebildet ist.

4. Adapter nach Anspruch 1, 2 oder 3, **dadurch gekennzeichnet, dass** das variable Unterteil (21) an unterschiedliche Anbauchassis (3) adaptierbar ausgebildet ist.

5. Adapter nach einem der vorhergehenden Ansprüche, **dadurch gekennzeichnet, dass** ein als Unterzugschale ausgebildetes Adapterteil (26) des Unterteils (21) einen Seitenversatz oder eine seitliche Kröpfung (32) aufweist.

6. Adapter nach einem der vorhergehenden Ansprüche, **dadurch gekennzeichnet, dass** das Unterteil (21) als Unterzug zur Komplettierung des Längsholms (8), insbesondere seines Hutprofils, und zur gemeinsamen Bildung eines kastenförmigen Trägers ausgebildet ist.

7. Adapter nach einem der vorhergehenden Ansprüche, **dadurch gekennzeichnet, dass** das Unterteil (21), insbesondere der Unterzug, eine nach oben offene Wannenform aufweist.

8. Adapter nach einem der vorhergehenden Ansprüche, **dadurch gekennzeichnet, dass** das Unterteil (21) dazu ausgebildet ist, einen aufrechten Trägersteg (16) an einem Längsträger (15) des Anbauchassis (3) beidseits einzuspannen.

9. Adapter nach einem der vorhergehenden Ansprüche, **dadurch gekennzeichnet, dass** der Adapter (4) ein oder mehrere andere als Wechselteile ausgebildete Adapterteile (25-31) zur Anpassung an unterschiedliche Anbauchassis (3) aufweist.

10. Adapter nach einem der vorhergehenden Ansprüche, **dadurch gekennzeichnet, dass** Adapterteile (25,26) als äußere und innere Unterzugschalen ausgebildet sind.

11. Adapter nach einem der vorhergehenden Ansprüche, **dadurch gekennzeichnet, dass** ein Adapterteil (29,30) als Verstärkungsblech für den Längsträger (15) und/oder für ein anderes Adapterteil (25,26), insbesondere eine Unterzugschale, ausgebildet ist.

12. Adaptionsverfahren zur Verbindung eines motorisierten Zugkopfs (2) mit einem Anbauchassis (3) mittels eines Adapters (4), **dadurch gekennzeichnet, dass** der mehrteilig und modular ausgebildete Adapter (4) an unterschiedliche Anbauchassis (3) angepasst wird, wobei der Adapter (4) ein einheitliches Oberteil (20) und ein variables Unterteil (21) aufweist, die an einer Schnittstelle (40) fest oder bevorzugt lösbar miteinander über eine bevorzugt schweißfreie Befestigung (38), insbesondere eine Verschraubung, verbunden werden, wobei das Oberteil (20) ein oder mehrere als Gleichteile ausgebildete Adapterteile (22,23,24) aufweist, wobei ein Adapterteil (22) als bevorzugt plattenförmiges Deckblech ausgebildet ist, welches auch die Schnittstelle (40) für den Anbau des Unterteils (21) bildet.

13. Motorisierter, vorzugsweise frontgetriebener Zugkopf mit einem Adapter (4) zur Verbindung mit einem Anbauchassis (3), **dadurch gekennzeichnet, dass** der Adapter (4) nach mindestens einem der Ansprüche 1 bis 11 ausgebildet ist.

14. Anbauchassis mit einem Adapter (4) zur Verbindung des Anbauchassis (3) mit einem motorisierten, vorzugsweise frontgetriebenen Zugkopf (2), **dadurch gekennzeichnet, dass** der Adapter (4) nach mindestens einem der Ansprüche 1 bis 11 ausgebildet ist.

15. Fahrzeug, insbesondere Straßenfahrzeug, mit einem motorisierten, vorzugsweise frontgetriebenen Zugkopf (2), mit einem Anbauchassis (3) und mit einem einem Adapter (4) zur Verbindung von Zugkopf (2) und Anbauchassis (3), **dadurch gekennzeichnet, dass** der Adapter (4) nach mindestens einem der Ansprüche 1 bis 11 ausgebildet ist.

## Claims

1. Adapter for connecting a motorized tractor head (2) to an attachable chassis (3), wherein the adapter (4) is of multi-part and modular design for adaptation to different attachable chassis (3), wherein the adapter (4) has a standard upper part (20) and a variable lower part (21), which parts are fixedly or preferably releasably connectable or connected to each other at an intersection (40) via a preferably weld-free fastening (38), in particular a screw connection, **characterized in that** the upper part (20) has one or more adapter parts (22, 23, 24) designed as identical parts, wherein one adapter part (22) is designed as a preferably plate-like covering plate which also forms the intersection (40) for attaching the lower part (21).

2. Adapter according to Claim 1, **characterized in that** the upper part (20) and the lower part (21) are arranged one above the other, wherein the intersection (40) is arranged in a horizontal position, in particular horizontally.

3. Adapter according to Claim 1 or 2, **characterized in that** the upper part (20) is provided and designed for fastening, in particular fastening by welding, to an undercarriage (7), in particular to a longitudinal strut (8) having a downwardly open hat profile, of the tractor head (2), and the lower part (21) is provided and designed for the preferably weld-free fastening, in particular screw fastening, to the attachable chassis (3), in particular to a longitudinal member (15) of the attachable chassis (3).

4. Adapter according to Claim 1, 2 or 3, **characterized in that** the variable lower part (21) is designed to be adaptable to different attachable chassis (3).

5. Adapter according to one of the preceding claims, **characterized in that** an adapter part (26) of the lower part (21) that is in the form of an understructure shell has a side offset or a lateral offset (32).

6. Adapter according to one of the preceding claims, **characterized in that** the lower part (21) is designed as an understructure for completing the longitudinal strut (8), in particular the hat profile thereof, and for joint formation of a box-shaped support.

7. Adapter according to one of the preceding claims, **characterized in that** the lower part (21), in particular the understructure, has an upwardly open trough shape.

8. Adapter according to one of the preceding claims, **characterized in that** the lower part (21) is designed to clamp an upright support web (16) to a longitudinal member (15) of the attachable chassis (3) on both sides.

9. Adapter according to one of the preceding claims, **characterized in that** the adapter (4) has one or more other adapter parts (25-31), which are designed as exchangeable parts, for adaptation to different attachable chassis (3).

10. Adapter according to one of the preceding claims, **characterized in that** adapter parts (25, 26) are designed as outer and inner understructure shells.

11. Adapter according to one of the preceding claims, **characterized in that** one adapter part (29, 30) is designed as a reinforcing plate for the longitudinal member (15) and/or for another adapter part (25, 26), in particular an understructure shell.

12. Adaptation method for connecting a motorized tractor head (2) to an attachable chassis (3) by means of an adapter (4), **characterized in that** the adapter (4) which is of multi-part and modular design is adapted to different attachable chassis (3), wherein the adapter (4) has a standard upper part (20) and a variable lower part (21), which parts are fixedly or preferably releasably connected to each other at an intersection (40) via a preferably weld-free fastening (38), in particular a screw connection, wherein the upper part (20) has one or more adapter parts (22, 23, 24) designed as identical parts, wherein one adapter part (22) is designed as a preferably plate-like covering plate which also forms the intersection (40) for attaching the lower part (21).

13. Motorized, preferably front-driven tractor head with an adapter (4) for connecting to an attachable chassis (3), **characterized in that** the adapter (4) is designed according to at least one of Claims 1 to 11.

14. Attachable chassis with an adapter (4) for connecting the attachable chassis (3) to a motorized, preferably front-driven tractor head (2), **characterized in that** the adapter (4) is designed according to at least one of Claims 1 to 11.

15. Vehicle, in particular road vehicle, with a motorized, preferably front-driven tractor head (2), with an attachable chassis (3) and with an adapter (4) for connecting tractor head (2) and attachable chassis (3), **characterized in that** the adapter (4) is designed according to at least one of Claims 1 to 11.

## Revendications

1. Adaptateur pour la liaison d'une tête de traction motorisée (2) à un châssis rapporté (3), dans lequel l'adaptateur (4) est réalisé en plusieurs parties et est modulaire en vue d'une adaptation à différents châssis rapportés (3), dans lequel l'adaptateur (4) présente une partie supérieure unitaire (20) et une partie inférieure variable (21), qui sont ou peuvent être assemblées l'une à l'autre de façon fixe ou de préférence séparable par une fixation (38) de préférence sans soudure, en particulier par une liaison vissée, à une interface (40), **caractérisé en ce que** la partie supérieure (20) présente une ou plusieurs pièces d'adaptateur (22, 23, 24) réalisées sous forme de pièces identiques, dans lequel une pièce d'adaptateur (22) est formée de préférence par une tôle de recouvrement en forme de plaque, qui forme aussi l'interface (40) pour le placement de la partie inférieure (21).

2. Adaptateur selon la revendication 1, **caractérisé en ce que** la partie supérieure (20) et la partie inférieure (21) sont disposées l'une au-dessus de l'autre, dans lequel l'interface (40) est disposée en position couchée, en particulier horizontalement.

3. Adaptateur selon une revendication 1 ou 2, **caractérisé en ce que** la partie supérieure (20) est prévue et réalisée en vue de la fixation, en particulier la fixation soudée, à un train roulant (7), en particulier à un longeron (8) avec un profil en chapeau ouvert vers le bas, de la tête de traction (2) et la partie inférieure (21) est prévue et réalisée en vue de la fixation de préférence sans soudure, en particulier par une liaison vissée, au châssis rapporté (3), en particulier à un longeron (15) du châssis rapporté (3).

4. Adaptateur selon une revendication 1, 2 ou 3, **caractérisé en ce que** la partie inférieure variable (21) est réalisée de façon adaptable à différents châssis rapportés (3).

5. Adaptateur selon l'une quelconque des revendications précédentes, **caractérisé en ce qu'**une partie d'adaptateur (26) réalisée sous forme de coquille de support de la partie inférieure (21) présente un décalage latéral ou un coude latéral (32).

6. Adaptateur selon l'une quelconque des revendications précédentes, **caractérisé en ce que** la partie inférieure (21) est réalisée sous forme de support pour compléter le longeron (8), en particulier son profil en chapeau, et pour former ensemble une poutre en forme de caisson.

7. Adaptateur selon l'une quelconque des revendications précédentes, **caractérisé en ce que** la partie inférieure (21), en particulier le support, présente une forme de cuvette ouverte vers le haut.

8. Adaptateur selon l'une quelconque des revendications précédentes, **caractérisé en ce que** la partie inférieure (21) est configurée pour serrer de part et d'autre une âme de poutre dressée (16) à un longeron (15) du châssis rapporté (3).

9. Adaptateur selon l'une quelconque des revendications précédentes, **caractérisé en ce que** l'adaptateur (4) présente une ou plusieurs autres parties d'adaptateur (25 - 31) réalisées sous forme de pièces échangeables pour l'adaptation à différents châssis rapportés (3).

10. Adaptateur selon l'une quelconque des revendications précédentes, **caractérisé en ce que** des parties d'adaptateur (25, 26) sont réalisées sous forme de coquilles de support extérieures et intérieures.

11. Adaptateur selon l'une quelconque des revendications précédentes, **caractérisé en ce qu'**une partie d'adaptateur (29, 30) est réalisée sous forme de tôle de renforcement pour le longeron (15) et/ou pour une autre partie d'adaptateur (25, 26), en particulier une coquille de support.

12. Procédé d'adaptation pour la liaison d'une tête de traction motorisée (2) à un châssis rapporté (3) au moyen d'un adaptateur (4), **caractérisé en ce que** l'on adapte l'adaptateur réalisé en plusieurs parties et modulaire (4) à différents châssis rapportés (3), dans lequel l'adaptateur (4) présente une partie supérieure unitaire (20) et une partie inférieure variable (21), que l'on assemble l'une à l'autre de façon fixe ou de préférence séparable par une fixation (38) de préférence sans soudure, en particulier par une liaison vissée, à une interface (40), dans lequel la partie supérieure (20) présente une ou plusieurs pièces d'adaptateur (22, 23, 24) réalisées sous forme de pièces identiques, dans lequel une pièce d'adaptateur (22) est formée de préférence par une tôle de recouvrement en forme de plaque, qui forme aussi l'interface (40) pour le placement de la partie inférieure (21).

13. Tête de traction motorisée, de préférence à traction avant, avec un adaptateur (4) pour la liaison à un châssis rapporté (3), **caractérisée en ce que** l'adaptateur (4) est réalisé selon au moins une des revendications 1 à 11.

14. Châssis rapporté avec un adaptateur (4) pour la liaison du châssis rapporté (3) à une tête de traction motorisée (2) de préférence à traction avant, **caractérisé en ce que** l'adaptateur (4) est réalisé selon au moins une des revendications 1 à 11.

15. Véhicule, en particulier véhicule routier, avec une tête de traction motorisée (2), de préférence à traction avant, avec un châssis rapporté (3) et avec un adaptateur (4) pour la liaison de la tête de traction (2) et du châssis rapporté (3), **caractérisé en ce que** l'adaptateur (4) est réalisé selon au moins une des revendications 1 à 11.
